# EUROPEAN PATENT APPLICATION

(11) **EP 4 538 149 A1**
(43) Date of publication of application: **16.04.2025**
(21) Application number: 23202382.0
(22) Date of filing: 09.10.2023
(51) Int. Cl.: B62D 21/15, B62D 25/08, B62D 29/04, B62D 35/00, B62D 35/02

(54) **A CRASH STRUCTURE FOR VEHCLES**

(71) Applicant: Bugatti Rimac LLC, 10000 Zagreb (HR)
(72) Inventor: HORVATIC, Filip, 10000 Zagreb (HR); HEYL, Frank, 14193 Berlin (DE); SUSAK, Ivan, 10361 Sesvetski Kraljevec (Zagreb) (HR)
(74) Representative: Tarabbia, Luigi

(57) **Abstract**

A crash structure for vehicles comprises a main body (2) extending along an impact-absorbing axis and attachment means adapted to establish a connection between the crash structure and a vehicle frame (F); the crash structure is at least partly counter-shaped to and connectable with an aerodynamic device, said aerodynamic device being attachable to said vehicle frame (F) or to a vehicle body (B).

## Description

The present invention is related to a so-called "crash structure", that is structural assemblies located on the front or rear portion of a vehicle (e.g., such vehicle being an automobile) and dedicated to absorbing a given amount of kinetic energy during collisions or accidents of the vehicle itself. The invention also relates to a sub-assembly (10) associable to a vehicle frame (F) and/or body (B), such sub-assembly (10) comprising one or more of the aforecited crash structures and an aerodynamic device, which in turn can be a front spoiler or splitter, or a rear aerodynamic device such as a so-called "diffuser".

It is known in the art that modern vehicles must be equipped with suitable devices which prevents (or in any case, limit) injuries to the vehicle's occupants by absorbing the energy of impacts and accidents: such devices usually are known as "bumpers", and bumpers are typically arranged across the front and rear of a vehicle and/or underneath the vehicle body (B) and the frame (F).

In order to prevent damage to the vehicle structure (e.g., in the event of an impact from the rear), deformable elements are used in combination with bumper beams: such deformable elements may be called "crash boxes" and they usually are thin-walled elements having a usually rectangular/parallelepiped shape and made of metal (e.g., steel, aluminium) or plastic.

The crash boxes between the longitudinal member and the bumper beam absorb kinetic energy generated in the event of an impact by converting the impact energy into deformation work, and this absorption prevents permanent damage to the longitudinal rails, occupant(s), and vehicle components when a critical stress level is exceeded.

Known type crash boxes (and their related bumpers) are usually realized with sheet metal shells or extruded metal - usually, aluminium - sections, therefore resulting bulky, heavy and very limited in terms of possible geometries and/or spatial layouts: as a consequence of this, known-type crash boxes are substantially difficult to be integrated with supercar or hypercar bodies, since they usually have very high requirements in terms of aerodynamic efficiency of their front and rear portions (and since they are designed with very large front and/or rear aerodynamically active portions or devices such as the so-called "aerodynamic devices"). Actually, whenever a vehicle body (B) has a front or rear portion "occupied" by a large aerodynamic device, the technical restraints determining the overall shape of such an aerodynamic devices imply that the traditional crash structure based on the combination "prismatic/parallelepiped crash boxes + bumper beams" does not have a sufficient space and a technically efficient position with respect to the vehicle frame (F) (it is also to be noted that crash structures need to be "protruding" from the main vehicle structure/frame (F), otherwise the kinetic energy deriving from impacts will not be dispersed/absorbed at a sufficient level), and this lack of "useful space" leads to an intrinsic unsafety of the vehicle itself... and to the impossibility of obtaining road-worthiness during the homologation procedures as well.

Having stated the prior art drawbacks, it is an object of the present invention to provide a crash structure, and a sub-assembly (10) comprising at least one of such crash structure and an aerodynamic device which can overcome the aforementioned drawbacks, and which therefore can ensure a high degree of structural and functional integration with a vehicle frame (F) or body (B) (and in particular, with the front or rear portions of such vehicle frame (F) or body (B)) without compromising the capability of absorbing kinetic energy during impacts or collisions and at the same time maintaining the maximum aerodynamic efficiency of the device which is connected to the crash structure itself.

At the same time, the present invention aims to obtain a crash structure whose overall geometry and/or spatial occupancy can be devised in a wide array of shapes and proportions, so as to enable its fitment into a corresponding wide array of vehicles having different dimensions, proportions, and performance envelopes.

These aims, along with other technical advantages, will be achieved by a crash structure as in the present invention as described and claimed hereinafter, and represented in an exemplificative yet not limiting embodiment in the annexed figures, wherein:

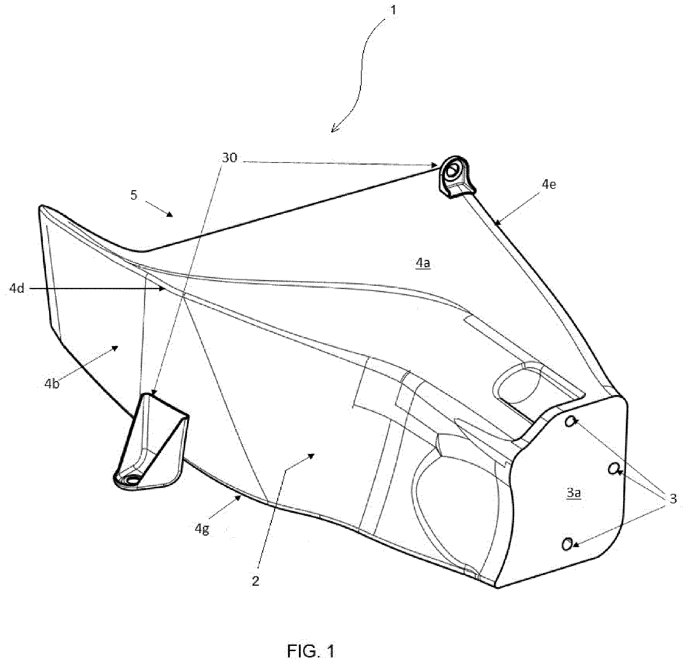

- Figure 1 is a top-front perspective view of a possible embodiment of a crash structure according to the invention;

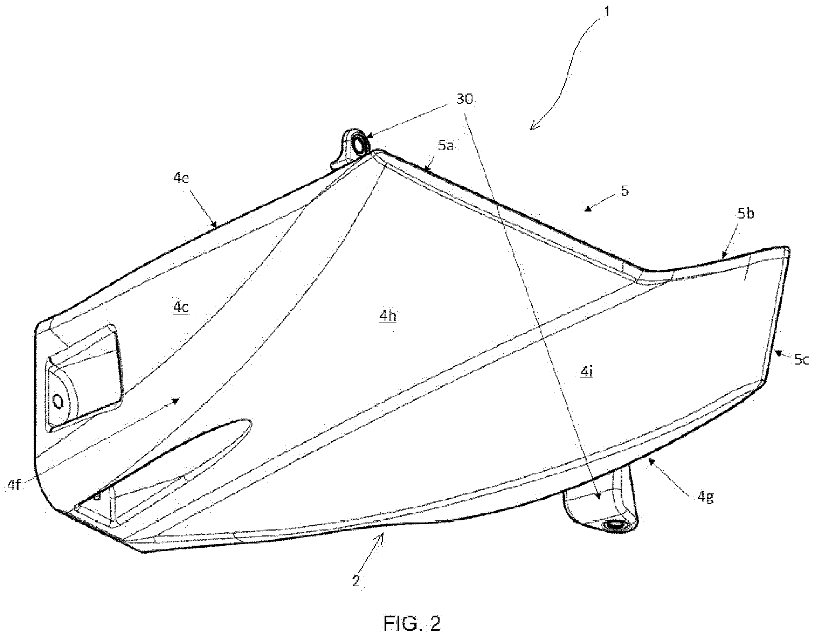

- Figure 2 is a bottom-rear perspective view of a crash structure according to the invention;

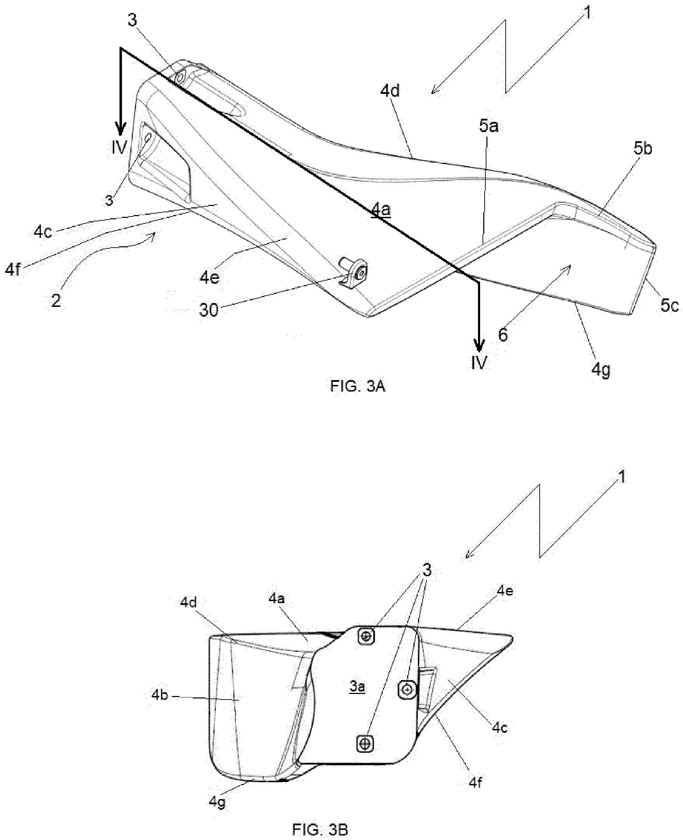

- Figure 3A is a top-rear perspective view of a crash structure according to the invention;
- Figure 3B is a front view of a crash structure according to the invention;

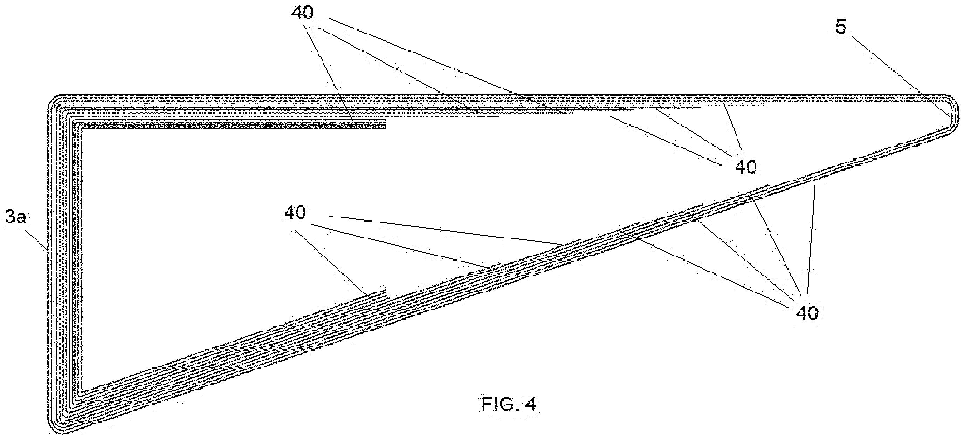

- Figure 4 is a sectional view of a crash structure according to the invention along the trace IV-IV of figure 3A;
- Figure 5 is a schematic longitudinal view of a crash structure according to the invention depicted along some geometrical reference axes relatable to a vehicle's frame (F) and/or body (B);
- Figure 6 is a perspective view of a so-called "sub-assembly" in which an aerodynamic device is structurally connected with two crash structures according to the invention; and

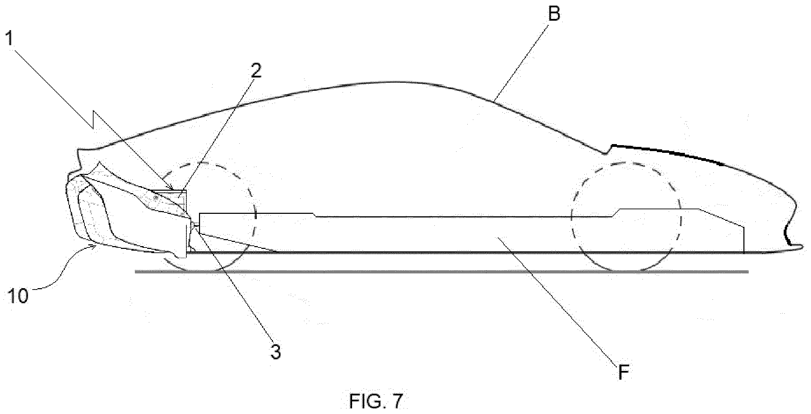

- Figure 7 is a schematic side view of a vehicle having a crash structure connected to an aerodynamic device and being implemented according to the present invention.

In the annexed figures, the crash structure (whose main yet not limiting "destination of use/application" may conveniently be in/for terrestrial vehicles such as automobiles and so on) as in the invention as a whole has been numbered with numeral reference (1) and it mainly comprises a main body (2) extending along an impact-absorbing axis (2a), and suitable attachment means (3), to be described in better detail later on: the attachment means (3) are adapted to establish a connection between the crash structure (1) itself and at least a vehicle frame (F), while the just cited impact-absorbing axis (2a) is located with a given relative layout (e.g., it can be parallel to) with respect to a longitudinal axis of such a vehicle frame (F) in a condition of assembling of the crash structure (1) to the vehicle.

Advantageously, in the crash structure (1) according to the invention, the main body (2) is associable to an aerodynamic device (100), while at the same time aerodynamic device (100) is connected or integrated to the main body (2).

Otherwise stated, the present invention provides for an aerodynamic device (100) structurally and functionally bound with such a main body (2), and the main body (2) and/or the aerodynamic device (100) are attachable to a vehicle frame (F) and/or to a vehicle body (B) connected to the just cited vehicle frame (F).

Otherwise stated, the present invention provides for a highly integrated crash structure wherein two main components are structurally and functionally correlated: such two components are the main body (2) (whose primary function consists in absorbing kinetic energy during impacts or crashes) and the aerodynamic device (100), which is intimately connected to the main body (2) in such a way to exert its airflow "control" function without hampering the functionality of the main body (2) itself.

According to different possible embodiments of the invention, the main body (2) can be suitably attached/connected to the aerodynamic device (100), or it can also be intimately integrated (e.g., in a so-called "monolithic layout") to the aerodynamic device (100) itself.

According to a further functional advantage of the present invention, the main body (2) may at least be partly counter-shaped to and connectable with the aerodynamic device (100) which in turn is attachable to the vehicle frame (F) (and/or to a vehicle body (B) connected to the vehicle frame (F)).

The relative interconnection relationship just described, and hereinafter claimed, allows for an optimal functional synergy between the crash structure, the vehicle frame (F) and the rest of the vehicle components, in particular with regard to the impact-absorbing capability in vehicles wherein their external conformation/appearance does not allow for the presence of traditional bumpers: actually, the crash structure (1) according to the invention is capable of receiving and properly dissipating the kinetic energy deriving from impacts and which is mainly transmitted onto the aerodynamic device (which is very likely to happen in supercars or hypercars, whose front/rear ends are largely occupied by such aerodynamic devices) and which therefore requires a non-traditional setup of the crash structures themselves.

In order to allow for the correct downforce generation by the aerodynamic device in "normal driving conditions" (that is, when no impact or crash is happening/occurring), the crash structure's main body (2) may conveniently define at least one (or if required more than one) concave or "channel-shaped" structure: such a concave structure is at least partially counter-shaped to a channeling duct or surface of the aerodynamic device (100), in such a way that the crash structure (1) is advantageously connectable to the aerodynamic device (100).

Generally speaking, the main body (2) may conveniently define a 3D prismatic body (2), e.g., a cube or a parallelepiped or a truncated cone or a truncated pyramid or a prism, and in any case the overall three-dimensional shape of said main body (2) can be designed and geometrically adapted to the aerodynamic device (100) as illustrated herebelow.

In terms of possible embodiments of the invention, and regarding the fact that such a crash structure (1) is engageable/connectable to different kinds of aerodynamic devices such as spoilers, splitters, aerodynamic devices or the like, it can be seen that the concave structure of the crash structure (1) itself is designed in order to be coupled/connected to a "hidden" surface or volume portion of the (generalized) aerodynamic device, so that the surface or volume portion of the latter which is directly exposed to the airflow is not hampered with mechanical interferences or protrusions deriving from the crash structure (1) itself.

Delving deeper into details and looking at the annexed figures, it can be seen that in a possible embodiment of the invention the crash structure (1) comprises a base face (3a), on which the aforecited attachment means (3) can be conveniently located, and a predetermined number of side faces emerging from the base face (3a): conveniently, the side faces cooperatively act in order to define a variable cross-section of the crash structure (1) along said impact-absorbing axis (2a).

The crash structure (1) also comprises/defines at least a co-called "end portion" (5) which rests opposite to the base face (3a) along the impact-absorbing axis (2a), and advantageously at least one of said side faces and/or said end portion (5) are at least partly counter-shaped to corresponding faces or portions of the channeling duct or surface of the aerodynamic device (100).

Looking closely to the side faces, it can be seen that they may comprise at least a top side face (4a), which is extending along the impact-absorbing axis (2a) towards a first end edge (5a), and (at least) a first lateral external side face (4b) connected to a first edge (4d) of the top side face (4a): such a first lateral external side face (4b) is extending, along the impact-absorbing axis (2a) towards a second end edge (5b) connected with the just cited first end edge (5a) and towards an end portion edge (5c) connected with the second end edge (5b) itself.

Looking at the annexed figures it also can be seen the presence of:
- a first lateral internal side face (4i) opposite to said first lateral external side face (4b);
- a bottom side face (4h) extending, along the impact-absorbing axis (2a) towards a first end edge (5a) (such a bottom side face (4h) is substantially opposite to the top side face (4a)); and
- a lower face (4g) connected to a lower portion of the first external and/or internal side face (4b) and/or (4i).

According to the depicted exemplificative embodiment in the figures the faces of the main body (2) which are counter-shaped to the aerodynamic device (100) are the first lateral internal side face (4i) and the bottom side face (4h).

It also can be implemented, within a possible embodiment of the present invention, a second lateral side face (4c) connected to a second edge (4e) of the top side face (4a): such a second lateral side face (4c) is conveniently extending, along the impact-absorbing axis (2a) at least towards the first end edge (5a).

From a geometric/volumetric standpoint, the top side face (4a), the first lateral external side face (4b), the first lateral internal side face (4i) and the lower face (4g) cooperatively define a fin-like protrusion (6): such a fin-like (or -shaped) protrusion (6) is connected to a first edge (4d) of the top side face (4a) and is extending, along the impact-absorbing axis (2a), towards a second end edge (5b) which in turn is connected with the first end edge (5a) and towards an end portion edge (5c) (such an end portion edge (5c) is conveniently connected with said second end edge (5b), as seen in the annexed figures).

According to various design and/or operative requirements, it is possible to foresee a further embodiment of the present crash structure (1) wherein at least two or more fin-like protrusions (6) are defined (at least) by the side faces: in this possible embodiment, each of these two (or more) fin-like protrusions is adapted to be at least partially counter-shaped and located, in a condition of connection or assembly of the crash structure (1) to the aerodynamic device(100), within a suitable space of the aerodynamic device (100) itself.

As a further example of the just introduced "multi-fin" embodiment of the crash structure (1), it can be exemplified that if the aerodynamic device (100) defines a plurality of channeling underbody/undertail ducts separated by longitudinal vanes, each of the fin like protrusions (6) can conveniently be at least partly counter-shaped to the inner/hidden extremities of such vanes, so that when the crash structure (1) is connected to such an aerodynamic device (100), its fin-like protrusions (6) are housed within such inner/hidden extremities of the vanes themselves. Conveniently, the top side face (4a), the first lateral external side face (4b), the second lateral side face (4c) and the bottom side face (4h) cooperatively define a tapered prismatic overall shape of the crash structure (1); in the self-defined vocabulary of the present invention, such a "tapered prismatic overall shape" can for example de exemplified by a frusto-conical shape or by a truncated-pyramid shape. Looking again at the attached figures, it can be seen that the crash structure (1) according to the invention may further comprise coupling means (30) adapted to connect the top side face (4a) and/or the first lateral external side face (4b) and/or the second lateral side face (4c) and/or the fin-like protrusion (6) to the aerodynamic device (100): even more in detail, according to various possible embodiments of the invention such coupling means (30) may comprise at least a removable joining element emerging from the top side face (4a) and/or the first lateral external side face (4b) and/or the second lateral side face (4c) and/or the fin-like protrusion (6) such as:
- nut-and-bolt joints; and/or
- press-fit joints; and/or
- adhesive layers placeable between the crash structure (1) and the aerodynamic device (100).

Turning now the attention to the internals of the crash structure (1), an aspect of the present invention may advantageously provide for the fact that it comprises a plurality of structural layers (40) mutually super-imposed and cooperatively defining its main body (2) along the impact-absorbing axis (2a): in order to gain a high weight/performance ratio, the just cited structural layers (40) can be made of composite material (e.g., carbon fibers and/or Kevlar fibers and/or natural fibers and/or short fibers and/or polymer fibers, or any combination of composite materials known in the art).

Advantageously, in order to impart to the crash structure (1) an optimal behavior during the events of impact absorption, the predetermined number of structural layers (40) is progressively decreasing from the base face (3a) towards the end portion (5) (e.g., towards the edge (5a)): in this way, crash absorption occurs by progressive crushing of the crash structure (1), and such progressive crushing occurs by progressive crushing of the layers (which therefore collapse in a foreseeable/controlled way).

According to eventual technical needs, the thickness of a single structural layer (40) within the present invention can be constant or it can also be increasing or decreasing, so as to adapt the crash structure to various performance requirements in terms of bearable loads and/or kinetic energy dissipation.

According to a functionally-equivalent aspect of the invention, the progressive decrease related to the structural layers (40) can be described in terms of thickness and/or density, and such a progressive decrease can be suitably tailored and/or quantified in order to gain the correct behavior of the crash structure (1) during a destructive impact occurring to the vehicle.

The overall thickness and number of layers can be determined as a result of design requirements (e.g., maximum amount of kinetic impact energy to be absorbed, maximum overall "longitudinal space" admitted in the crash structure and/or aerodynamic device design... and ultimately, maximum overall dimensional availability within the vehicle design) and exemplificatively can be ranging from 50 layers, located in correspondence or proximity of the base face (3a), and 1 layer, located in correspondence or proximity of the end portion (5).

Depending on design and/or operative requirements, the crash structure according to the invention can be consisting in a given number of composite (material) layers, or it can also be comprising one or more composite fiber layers laid upon a so-called "core material" (e.g., such a core material can conveniently be comprising at least one polymethacrylimide based structural foam layer, e.g., available on the market under the commercial name/brand of ROHACELL ^{©}); nevertheless, according to a further possible embodiment of the invention the crash structure can comprise one or more composite fiber layers mutually defining an inner hollow core.

In the various possible embodiments of the present invention, the aerodynamic device (100) being a part of the crash structure (1) may be of any given/known type, as a function of the position of the crash structure (1) itself with respect to the vehicle frame (F) and/or body (B): for example, if the crash structure (1) is to be positioned in the rear portion of a vehicle, such an aerodynamic device may be a so-called "diffuser" (as represented in the exemplificative - yet not limiting - annexed drawings), but however in case the crash structure may be located differently this aerodynamic device may be of a different kind (e.g., a so-called front spoiler or splitter in the front portion of the vehicle or a so-called "mini-skirt" in a lateral portion of the vehicle and so on).

The present invention also encompasses a so-called "sub-assembly" (10) connectable to a vehicle frame (F) and/or body (B) (e.g., to a front or to a rear end of a vehicle) comprising at least a crash structure (1) according to what hereabove described and/or to what herebelow claimed, and at least an aerodynamic device (100) defining at least a channeling duct or surface: in this sub-assembly (10), the (at least one) crash structure (1) is at least partly counter-shaped and connected to the aerodynamic device (100) so as to gain simultaneously maximum downforce generation capability and maximum impact-absorption readiness in case of events such rear-endings or front impacts.

It is to be noted that with the suitable design adaptations, the aerodynamic device combinable with one or more of the crash structures (1) can be a "diffuser" or, according to the operative requirements, also be a "lateral" device such a so-called mini-skirt or a side air vent/port or a side air exhaust or discharge channel.

In the specific and exemplificative case in which the aerodynamic device (100) is a "diffuser" (and such a kind of device is typically connectable to a rear end of a vehicle frame (F) and/or body (B), defining therein one or more channeling ducts (101) extending along a longitudinal axis of the vehicle itself), the at least one crash structure (1) is conveniently connected to at least one of said channeling ducts (101) (e.g., the crash structure is connected above the ducts or on the side of the duct, on the interior of the diffuser). In order to ensure the suitable structural coherence to the sub-assembly (10), the coupling means (30) are operatively acting between a crash structure (1) and the aerodynamic device, and they may comprise:
- a predetermined number of jointing elements (which can be reversible, therefore allowing de-coupling of the crash structure(s) (1) with respect to the aerodynamic device) located between the crash structure (1) and the aerodynamic device; and/or
- a predetermined number of interference-based or interlocking joints acting between the crash structure (1) and the aerodynamic device. According to the operative requirements of the sub-assembly (10) and/or of the entire vehicle in which such a sub-assembly (10) can be designed and connected within/into, the sub-assembly (10) may also be realized as a single integral piece, as it will be described more in detail later on: notwithstanding this, returning to the eventual presence of interference-based or interlocking joints, it can be seen that they may be located:
- along edges of the top side faces (4a) and/or of the first lateral external side faces (4b) and/or of the second lateral side faces (4c) (e.g., along lower faces (4g) of the first lateral external side faces (4b) and along lower faces (4f) of the second lateral side faces (4c)); and/or
- in correspondence of rear exit or terminal portions of one or more channeling ducts (101) (in this case, the interference-based or interlocking joints may typically comprise at least partially one or more fin-like protrusions (6) and corresponding fitting cavities (102) located in the aerodynamic device (100)).

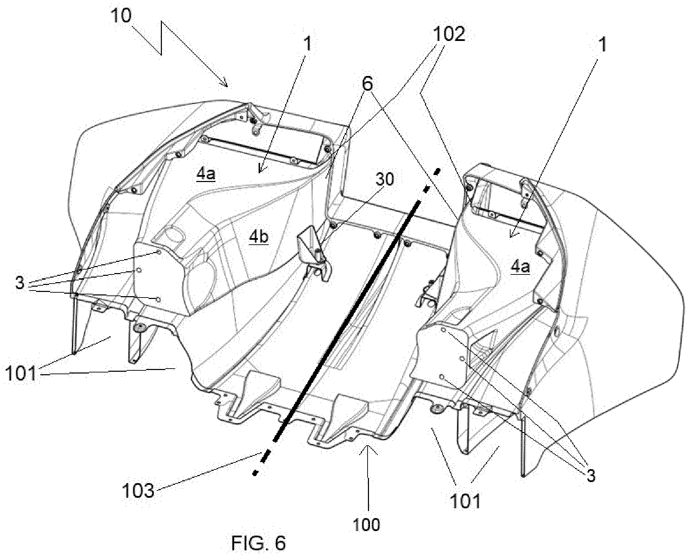

Looking at the exemplificative embodiment in figure 6, a sub-assembly (10) is shown wherein the aerodynamic device (100) is connected to at least two crash structures (1): the two crash structures (1) are located symmetrically with respect to a longitudinal median axis (103) of the aerodynamic device, so that the large transversal vehicle (rear) section occupied by such an aerodynamic device (100) can be efficiently set into connection with the crash structure in case of impacts (therefore, causing both crash structures (1) to be cooperatively acting in dissipating the impact-related kinetic energy).

As already cited before in the present description, one or more crash structure(s) (1) may be integrally molded with the aerodynamic device (100), in order to gain even more structural coherence of the sub-assembly (10) and in order to gain, to some extent, an "active cooperation" of the aerodynamic device itself in absorbing and/or dissipating impact-related kinetic energy (it is also to be noted that this functional cooperation may also be found in sub-assemblies where the crash structure(s) is/are connected with removable joining elements to the aerodynamic device, even if in those cases the effective share of the kinetic energy which can be absorbed by the aerodynamic device may be lower).

Turning back once again to figure 6 and considering the possibility of onepiece integral construction, in case of "(twin) symmetrical crash structures", the resulting sub-assembly (10) is comprising (at least) two integrally molded crash structures (1) symmetrically located with respect to the longitudinal median axis (103) of the aerodynamic device (100) itself. The present invention encompasses in its scope also a vehicle, which is not depicted in its essential parts owing to their obvious nature for a skilled technician pertaining to the technical field of the present invention: such vehicle essentially comprises a frame (F) extending along a respective longitudinal axis, from a vehicle rear portion to a vehicle front portion, and such a frame (F) is connected to a body (B), which can be hosting an aerodynamic device (100) and/or one or more other kinds of aerodynamic device(s) connectable to the body (B) or to the frame (F) with one or more of the crash structures (1) according to the invention.

Conveniently, the aerodynamic device (100) is connected to the frame (F) and/or to the body (B) in correspondence of a suitable vehicle portion, which is typically a rear vehicle portion: anyhow, if such an aerodynamic device is a splitter or a spoiler (instead of the hereby exemplified aerodynamic device (100)), or in case it presents one or more ducts for conveying air to brakes and/or to radiators and/or to other "downstream" aerodynamic devices such as venturi-effect tunnels creating downforce by discharging airflow over the bonnet and/or along the sides of the vehicle, these other possible forms of aerodynamic device may be suitably located in corresponding parts of the vehicle wherein their functionality is duly maximized.

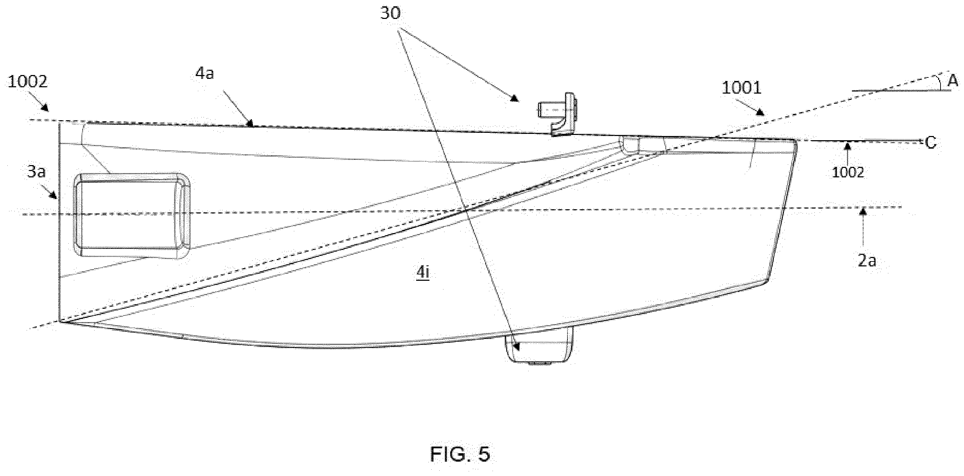

Within the overall vehicle's architecture according to the invention, the crash structure (1) is extending along an impact-absorbing axis (2a) which (see for example figure 5) is typically parallel to and/or coinciding with said longitudinal axis of the vehicle, and advantageously said at least one crash structure (1) cooperatively defines with said aerodynamic device (100) a sub-assembly (10) as hereabove illustrated and/or as herebelow claimed.

Remarkably, it is to be observed that the optimal achievement of the impact-absorbing capabilities of such sub-assembly is related to the following geometrical conditions which can be achieved/implemented in the vehicle:
- a first inclination axis (1001) of the bottom side face (4h) of said crash structure (1) with respect to said impact-absorbing axis (2a) defines a first inclination angle (A) between 0° and 45°; and/or
- a second inclination axis (1002) of the top side face (4a) of said crash structure (1) with respect to said impact-absorbing axis (2a) defines a second inclination angle (C) between 0° and 45°, said second inclination angle (C) being preferably between 0° and 20° and being even more preferably equal to or less than 5°.

For the sake of maximum comprehension of the invention, it can be observed that the first inclination axis (1001) is represented, in figure 5, as a straight line connecting the bottom edge and top edge of the surface (4h), which is a curved surface: such a straight line is therefore representative of a geometrical and ideal approximation of the surface (4h), and it is useful for the determination of the relevant relative angles herein described (and also claimed).

The angular ranges (A) and (2) just recalled are determined, according to the invention, in order to gain the optimal performance of the sub-assembly (10) (and consequently, the optimal performance of the crash structure(s)) in terms of receiving and absorbing/dissipating impact-related kinetic energy: such optimal performance is critically linked to this angular range, in particular regarding the second angle (2), in order to avoid the insurgence of transverse cracks within the crash structure(s) themselves. Actually, insurgence of a so-called "transverse crack" in a crash structure according to the present may be described as the occurrence of a sudden interruption of the crash structure integrity along a plane/direction which is substantially perpendicular to its impact-absorbing axis (2a): such a crack therefore is not gradually occurring and moreover it occurs transversally to the lying planes of the composite layers, causing a sudden decrease of the structural integrity and a neat step-down in the progression of absorption of the kinetic energy.

In view of the undesirable effects brought along an eventual transverse crack, the present invention therefore devised the angular ranges for the first and the second angles (A) and (2) in order to maintain the crash structure (1), in a wide range of vehicle's driving conditions (and therefore taking into account spatial dislocations due to pitch/roll/yaw of the vehicle itself) at an inclination whereby any eventual crash or impact keeps the crash structure in a condition whereby transverse crack are highly non-likely, and whereby the gradual crushing process takes place.

The described, illustrated and claimed invention achieves the aforecited technical aims and surpasses the shortcomings of the prior art hereabove mentioned, starting but not being limited to the advantage consisting in a very high degree of volumetric compactness of the crash structure itself along with a top-notch kinetic energy absorbing capability and with a complete integration within the shapes and geometries of the aerodynamic device to which such a crash structure can be connected.

More in detail, it is to be observed that the peculiar shape of the crash box(es) according to the invention allows for a perfect geometrical integration within aerodynamically efficient devices (e.g., large rear aerodynamic devices, wherein a very wide and substantially long channelling ducts need to be designed and realized in order to gain a sufficiently high "venturi effect" to create downforce in the vehicle's underbody) without impacting on the airflow running through the "exposed surfaces" of the aerodynamic devices themselves: such geometrical adaptability is also made possible by the fact that the crash box(es) according to the invention can be stretched out, in a longitudinal direction, up to the extreme edge of such aerodynamic devices therefore maximizing their capability of being loaded with impact kinetic energy and eliminating any delay of intervention in case the impact is, at first, discharged only onto the aerodynamic device itself (which could have, at its best, an extremely limited shock absorption capability).

It is also to be noted that the various degrees of structural connection between the aerodynamic device and one or more of the crash boxes according to the invention allows for a very convenient choice of assembling and/or production processes: for example, the capability of producing in a single piece the entire sub-assembly (10) of the crash box(es) and a rear aerodynamic device (100) allows for the determination of a highly capable device both having (at the same time!) excellent impact performance, very good efficiency in creating downforce and reduced overall implementation times and costs.

As a consequence of what just stated, it's safe to say that the overall structural architecture of the crash structure according to the invention allows for the determination of a wide range of "sub-assemblies" comprising one or more of such crash structures and many kinds of aerodynamic devices (front spoilers or splitters, rear aerodynamic devices and so on), and therefore it allows for the best possible definition/design of the vehicle from an aerodynamic efficiency standpoint without compromising homologation requirements and safety features of the vehicle itself.

Finally, the crash structure assembly as in the present invention can also be implemented in any other embodiment enclosed in its inventive concept as claimed, also by way of collateral modifications available to a skilled technician in the technical sector of pertinence of the invention itself, and thus maintaining the functional achievements of the invention along with practicality of production, usage, and maintenance.

## Claims

1. a crash structure (1) for vehicles, comprising:
- a main body (2) extending along an impact-absorbing axis (2a), said impact-absorbing axis (2a) being preferably parallel with respect to a longitudinal axis of a vehicle frame (F) in a condition of assembling of such crash structure (1) to said vehicle; and
- attachment means (3) adapted to establish a connection between said main body (2) and at least said vehicle frame (F),
**characterized in that** said main body (2) is associable to an aerodynamic device (100), said aerodynamic device (100) being preferably connected or integrated to the main body (2), said aerodynamic device (100) and/or said main body (2) being attachable to said vehicle frame (F) and/or to a vehicle body (B) connected to said vehicle frame (F).

2. a crash structure as in claim 1, wherein said main body (2) comprises:
- a base face (3a), said attachment means (3) being located on said base face (3a);
- a predetermined number of side faces emerging from said base face (3a); and
- at least an end portion (5) opposite to the base face (3a) along said impact-absorbing axis (2a).

3. a crash structure as in any one of the preceding claims, wherein:
- the main body (2) defines a concave structure, said concave structure being at least partially counter-shaped to a channeling duct or surface of the aerodynamic device (100);
- said side faces emerging from said base face (3a) define a variable cross-section of said crash structure (1) along said impact-absorbing axis (2a); and
- at least one of said side faces and/or said end portion (5) are at least partly counter-shaped to corresponding faces or portions of said channeling duct or surface of the aerodynamic device (100).

4. a crash structure as in any one of the preceding claims, wherein said main body (2) defines a 3D prismatic body (2), said prismatic body (2) being preferably a cube or a parallelepiped or a truncated cone or a truncated pyramid or a prism.

5. a crash structure as in claim 1, wherein said main body (2) is at least partly counter-shaped to said aerodynamic device (100).

6. a crash structure as in claim 3, wherein said side faces comprise:
- a top side face (4a) extending, along the impact-absorbing axis (2a) towards a first end edge (5a); and
- a first lateral external side face (4b) connected to a first edge (4d) of said top side face (4a) and extending, along the impact-absorbing axis (2a) towards a second end edge (5b) connected with said first end edge (5a) and towards an end portion edge (5c) connected with said second end edge (5b);
- a first lateral internal side face (4i) opposite to said first lateral external side face (4b);
- a bottom side face (4h) extending, along the impact-absorbing axis (2a) towards a first end edge (5a) and being opposite to said top side face (4a);
- a lower face (4g) connected to a lower portion of said first lateral external side face (4b) and/or said first lateral internal side face (4i); and
- a second lateral side face (4c) connected to a second edge (4e) of the top side face (4a) and extending, along the impact-absorbing axis (2a) at least towards the first end edge (5a).

7. a crash structure as in any one of the preceding claims, wherein the top side face (4a), the first lateral external side face (4b), the second lateral side face (4c) and the bottom side face (4h) cooperatively define a tapered prismatic overall shape of the crash structure (1), said tapered prismatic overall shape being preferably a frusto-conical shape or a truncated-pyramid shape and even more preferably being a semi-open frusto-conical or truncated-pyramid shape.

8. a crash structure as in any one of the preceding claims, wherein at least, the top side face (4a), the first lateral external side face (4b), the first lateral internal side face (4i) and the lower face (4g) cooperatively define a fin-like protrusion (6) connected to a first edge (4d) of said top side face (4a) and extending, along the impact-absorbing axis (2a) towards a second end edge (5b) connected with said first end edge (5a) and towards an end portion edge (5c) connected with said second end edge (5b).

9. a crash structure as in any one of the preceding claims, wherein it further comprises coupling means (30) adapted to connect the top side face (4a) and/or the first lateral external side face (4b) and/or the second lateral side face (4c) and/or the fin-like protrusion (6) to the aerodynamic device (100), said coupling means preferably comprising at least one removable joining element emerging from the top side face (4a) and/or the first lateral external side face (4b) and/or the second lateral side face (4c) and/or the fin-like protrusion (6), said at least one removable joining element even more preferably comprising mechanical fastening means and/or press-fit joints and/or adhesive layers placeable between the crash structure (1) and the aerodynamic device (100).

10. a crash structure as in any one of the preceding claims, comprising one or more structural layers (40) mutually super-imposed and cooperatively defining said main body (2) along the impact-absorbing axis (2a), said structural layers being preferably made of composite material.

11. a crash structure as in any one of the preceding claims wherein, said predetermined number and/or a thickness and/or a density of structural layers (40) progressively decreases from the base face (3a) towards said end portion (5), said composite material preferably comprising carbon fibers and/or Kevlar fibers and/or natural fibers and/or short fibers and/or polymer fibers.

12. a crash structure as in any one of the preceding claims, wherein it comprises of one or more structural layers (40) laid upon a core material.

13. a crash structure as in any one of the preceding claims, wherein it comprises one or more structural layers (40) mutually defining an inner hollow core.

14. a crash structure as in any one of the preceding claims, wherein the aerodynamic device (100) is a diffuser, said diffuser being connectable to a rear portion of a vehicle frame (F) and/or body (B).

15. a sub-assembly (10) connectable to a vehicle frame (F) and/or body (B), and preferably to a front or to a rear end of a vehicle, comprising:
- at least a crash structure (1) preferably according to any one of the preceding claims; and
- at least an aerodynamic device (100) defining at least a channeling duct or surface,
wherein the crash structure (1) is at least partly counter-shaped and connected or integral to the aerodynamic device (100).

16. a sub-assembly (10) as in claim 15, wherein the aerodynamic device (100) is a diffuser, said diffuser being connectable to a rear end of a vehicle frame (F) and/or body (B) and defines one or more channeling ducts (101), the at least one crash structure (1) being connected or integral to at least one of said channeling ducts (101) and/or to at least a face and/or to an edge of the aerodynamic device (100).

17. a sub-assembly (10) as in claims 15 or 16, wherein it further comprises coupling means (30) operatively acting between the crash structure (1) and the aerodynamic device (100) and comprise:
- at least one joining element, said joining element being preferably removable, located between the crash structure (1) and the aerodynamic device (100); and/or
- a predetermined number of interference-based or interlocking joints acting between the crash structure (1) and the aerodynamic device (100), said interference-based or interlocking joints being located:
- along lower edges of the first lateral external side faces (4b) or along lower edges of the second lateral side faces (4c); and/or
- in correspondence of rear exit or terminal portions of one or more channeling ducts (101), said interference-based or interlocking joints preferably comprising at least partially one or more fin-like protrusions (6) and corresponding fitting cavities (102) located in the aerodynamic device (100).

18. a sub-assembly (10) as in any one of the preceding claims from 15 to 17, wherein the aerodynamic device (100) is connected to at least two crash structures (1), each of said crash structures (1) being preferably located symmetrically with respect to a longitudinal median axis (103) of the aerodynamic device (100).

19. a sub-assembly (10) as in any one of the preceding claims from 15 to 18, wherein said at least one crash structure (1) is integrally molded with said aerodynamic device (100), said aerodynamic device (100) preferably being a diffuser and even more preferably comprising at least two integrally molded crash structures (1) symmetrically located with respect to said longitudinal median axis (103) of the aerodynamic device (100).

20. a vehicle comprising:
- a frame (F) extending along a vehicle longitudinal axis from a rear vehicle portion to a front vehicle portion, said frame (F) being connected to a body (B);
- an aerodynamic device (100) connected to said frame (F) and/or to said body (B) in correspondence of said rear vehicle portion; and
- at least one crash structure (1) connecting the aerodynamic device (100) to the frame (F) and/or to the body (B), said crash structure (1) extending along an impact-absorbing axis (2a) preferably parallel to and/or coinciding with said vehicle longitudinal axis,
wherein said at least one crash structure (1) cooperatively defines with said aerodynamic device (100) a sub-assembly (10) as in any one of the preceding claims.

21. a vehicle as in claim 20, wherein:
- a first inclination axis (1001) of the bottom side face (4h) of said at least one crash structure (1) with respect to said impact-absorbing axis (2a) defines a first inclination angle (A) between 0° and 45°; and/or
- a second inclination axis (1002) of the top side face (4a) of said at least one crash structure (1) with respect to said impact-absorbing axis (2a) defines a second inclination angle (C) between 0° and 45°, said second inclination angle (C) being preferably between 0° and 20° and being even more preferably equal to or less than 5°.
